Europäisches Patentamt

European Patent Office

Office européen des brevets

(19)

(11) **EP 1 269 694 B1**

(12) **EUROPEAN PATENT SPECIFICATION**

(45) Date of publication and mention
of the grant of the patent:
**23.02.2005 Bulletin 2005/08**

(21) Application number: **01915553.0**

(22) Date of filing: **30.03.2001**

(51) Int Cl.⁷: **H04L 12/56**, H04Q 11/04

(86) International application number:
**PCT/GB2001/001436**

(87) International publication number:
**WO 2001/076138 (11.10.2001 Gazette 2001/41)**

(54) **METHOD AND SYSTEM FOR CONTROLLING FLOWS IN SUB-PIPES OF COMPUTER NETWORKS**

VERFAHREN UND SYSTEM ZUR STEUERUNG VON DATENSTRÖMEN IN TEIL-DATENSTROM-BÜNDELN VON COMPUTERNETZWERKEN

PROCEDE ET SYSTEME POUR REGULER LE DEBIT DANS DES CANAUX DE COMMUNICATION SECONDAIRES DE RESEAUX INFORMATIQUES

(84) Designated Contracting States:
**AT BE CH CY DE DK ES FI FR GB GR IE IT LI LU NL PT SE TR**

(30) Priority: **31.03.2000 US 540428**

(43) Date of publication of application:
**02.01.2003 Bulletin 2003/01**

(73) Proprietor: **International Business Machines Corporation
Armonk, NY 10504 (US)**

(72) Inventors:
• **GORTI, Brahmanand, Kumar
  Cary, NC 27513 (US)**
• **HWANG, Dongming
  Winchester, Hampshire SO21 2JN (GB)**
• **JEFFERIES, Clark, Debs
  Durham, NC 27713 (US)**

• **SIEGEL, Michael, Steven
  Raleigh, NC 27615 (US)**
• **SUDEEP, Kartik
  Durham, NC 27705 (US)**

(74) Representative: **Ling, Christopher John
  IBM United Kingdom Limited,
  Intellectual Property Department,
  Hursley Park
  Winchester, Hampshire SO21 2JN (GB)**

(56) References cited:
EP-A- 0 901 307        EP-A- 0 914 016
WO-A-97/14240        WO-A-97/42788

• **BONOMI F ET AL: "THE RATE-BASED FLOW CONTROL FRAMEWORK FOR THE AVAILABLE BIT RATE ATM SERVICE" IEEE NETWORK, IEEE INC. NEW YORK, US, vol. 9, no. 2, 1 March 1995 (1995-03-01), pages 25-39, XP000493487 ISSN: 0890-8044**

**EP 1 269 694 B1**

## Description

## FIELD OF THE INVENTION

The present invention relates to computer networks, and more particularly to a method and system for providing differentiated services and a fine level of control for a computer network.

## BACKGROUND OF THE INVENTION

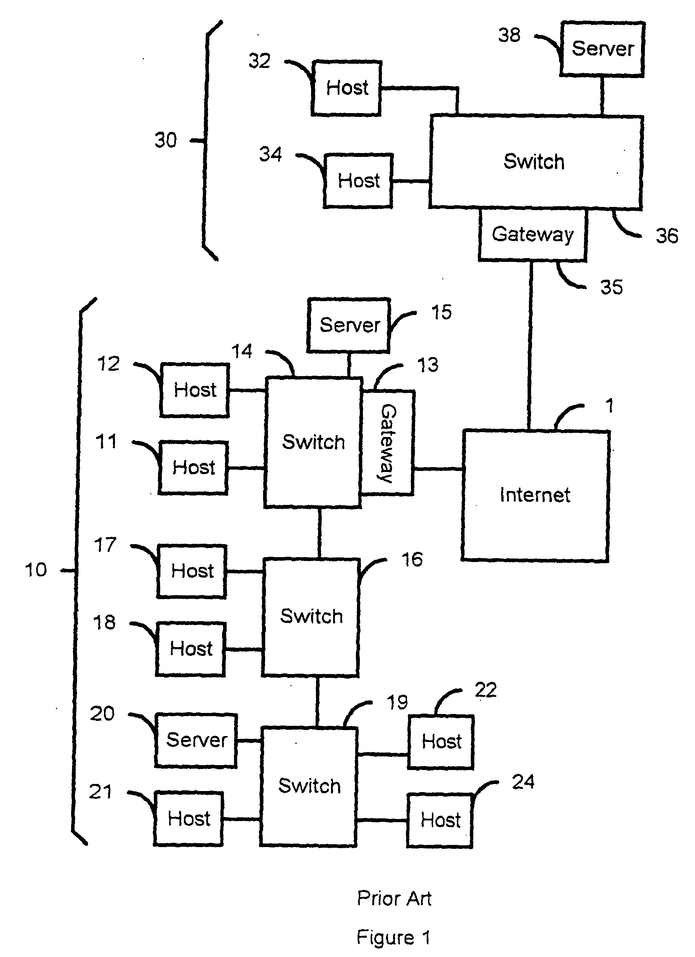

Driven by increasing usage of a variety of network applications, such as those involving the Internet, computer networks are of increasing interest. Figure 1 depicts conventional networks 10 and 30 which may be connected via the Internet 1. Each network 10 and 30 includes hosts 11, 12, 17, 18, 21 and 22 and 32 and 34, respectively. Each network 10 and 20 also includes switches 14, 16 and 19 and 36, respectively, and may include one or more servers such as the servers 15, 20 and 24 and 38, respectively. In addition, each network 10 and 30 may include one or more gateways 13 and 35, respectively, to the Internet 1. Not explicitly shown are routers and other portions of the networks 10 and 30 which may also control traffic through the networks 10 and 30 and which will be considered to be inherently depicted by the switches 14, 16 and 19 and 36, respectively, and the networks 10 and 30 in general. In addition, the Internet 1 includes its own switches and networks that are not explicitly depicted.

A switch, such as the switch 14 or 36 and certain switches (not shown) in the Internet 1 connected to the switches such as the switches 14 or 16 are considered to be at the edge of the network 10, 30 or the Internet 1, respectively. This is because these switches send and/or receive traffic directly to and/or from entities not directly under the control of the network 10, 30 or the Internet 1. For example, a network administrator or other user of the network 10 may have control over parameters set for, use of, and performance of the network 10. However, such a network administrator typically does not control the Internet 1 and may not control the network 30. The switch 14 couples directly to the gateway 13, which provides access to the Internet 1. This is not true of the switches 16 and 19. Thus, the switch 13 is considered to be at the edge of the network 10. Similarly, a switch (not shown) in the Internet 1 interfaces with the gateway 13. A network administrator or other user may control performance of some or all of the Internet 1, but not that of the network 10. Such a switch would thus be considered to be at the edge of the Internet.

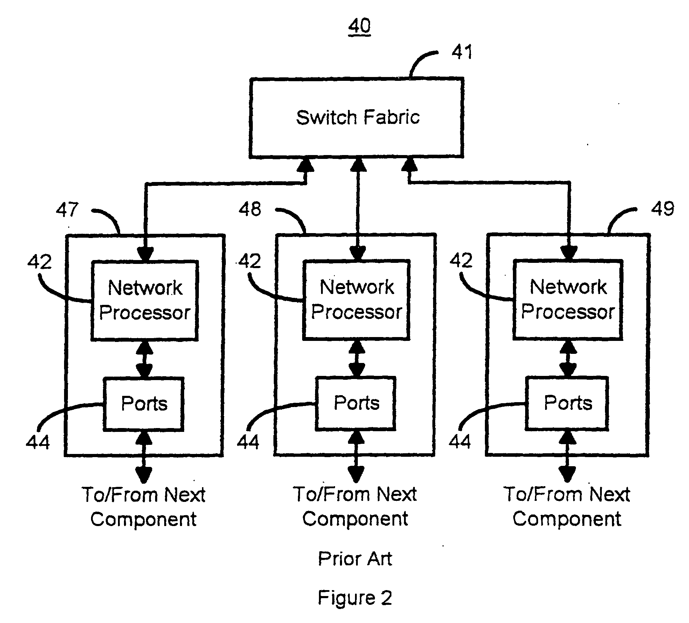

Figure 2 depicts a high-level block diagram of a switch 40 which can be used in a computer network. Thus, the switch 40 may be used in the Internet 1 and for the switches 14, 16, 19 and 36. The switch 40 includes a switch fabric 41 coupled with blades 47, 48 and 49. Each blade 47, 48 and 49 is generally a circuit board and includes at least a network processor 42 coupled with ports 44. Thus, the ports 44 are coupled with hosts (not shown) or other components in the network in which the switch 40 resides. The blades 47, 48 and 49 can provide traffic to the switch fabric 41 and accept traffic from the switch fabric 41. Thus, any component connected with one of the blades 47, 48 or 49 can communicate with another component connected to another blade 47, 48 or 49 or connected to the same blade.

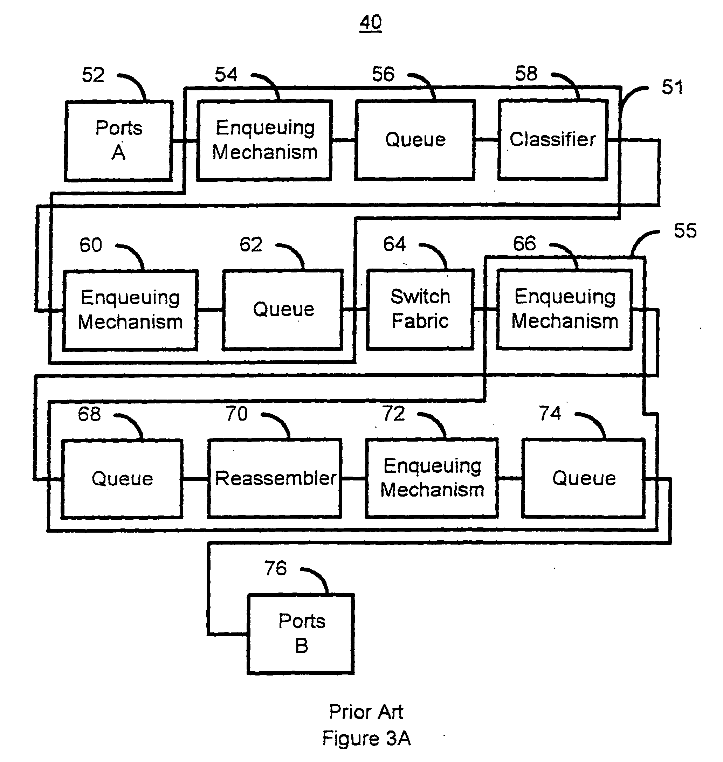

Figure 3A depicts another simplified block diagram of the switch 40, illustrating some of the functions performed by network processors 51 and 55. The switch 40 couples components (not shown) connected with ports A 52 with those components (not shown) connected with ports B 76. The switch 40 performs various functions including classification of data packets provided to the switch 40, transmission of data packets across the switch 40 and reassembly of packets. These functions are provided by the classifier 58, the switch fabric 64 and the reassembler 70, respectively. The classifier 58 classifies packets which are provided to it and breaks each packet up into convenient-sized portions, which will be termed cells. The switch fabric 64 is a matrix of connections through which the cells are transmitted on their way through the switch 40. The reassembler 70 reassembles the cells into the appropriate packets. The packets can then be provided to the appropriate port of the ports B 76, and output to the destination hosts. The classifier 54 may be part of one network processor 51, while the reassembler 70 may be part of another network processor 55. The portions of the network processors 51 and 55 depicted perform functions for traffic traveling from ports A 52 and to ports B 76, respectively. However, the network processors 51 and 55 also perform functions for traffic traveling from ports B 76 and to ports A 52, respectively. Thus, each of the network processors 51 and 55 can perform classification and reassembly functions.

Due to bottlenecks in transferring traffic across the switch 40, data packets may be required to wait prior to execution of the classification, transmission and reassembly functions. As a result, queues 56, 62, 68 and 74 may be provided. Coupled to the queues 56, 62, 68 and 74 are enqueuing mechanisms 54, 60, 66 and 72. The enqueuing mechanisms 54, 60, 66 and 72 place the packets or cells into the corresponding queues 56, 62, 68 and 74 and can provide a notification which is sent back to the host from which the packet originated.

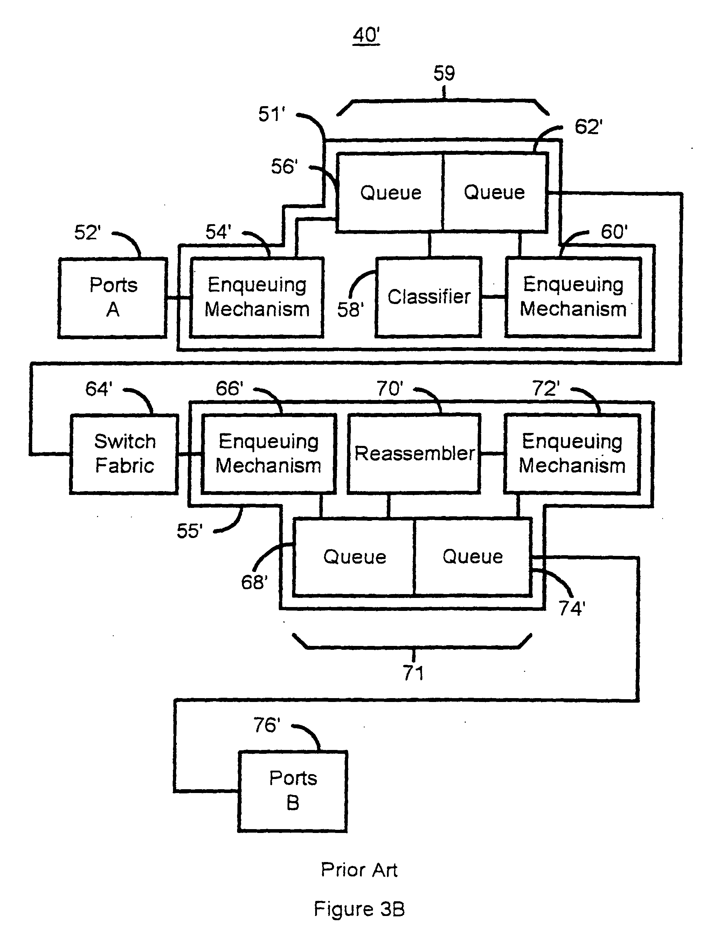

Although the queues 56, 62, 68 and 74 are depicted separately, one of ordinary skill in the art will readily realize that some or all of the queues 56, 62, 68 and 74 may be part of the same physical memory resource. Figure 3B depicts one such switch 40'. Many of the components cf the switch 40' are analogous to components of the switch 40. Such components are, therefore, labeled similarly. For example, the ports A 52' in the switch 40' correspond to the ports A 52 in the switch 40. In the switch 40', the queue 54 and the queue 62 share a single memory resource 59. Similarly, the queue 68 and the queue 74 are part of another single memory resource 71. Thus, in the switch 40', the queues 56, 62, 68 and 74 are logical queues partitioned from the memory resources 59 and 71.

Currently, most conventional switches 40 treat flows of traffic across the network in which the switch is used the same. There is, however, a trend toward providing customers with different services based, for example, on the price paid by a consumer for service. A consumer may wish to pay more to ensure a faster response or to ensure that the traffic for the customer will be transmitted even when traffic for other customers is dropped due to congestion. Thus, the concept of differentiated services has been developed. Differentiated services can provide different levels of service, or flows of traffic through the network, for different customers.

DiffServ is an emerging Internet Engineering Task Force (IETF) standard for providing differentiated services (see IETF RFC 2475 and related RFCs). DiffServ is based on behavior aggregate flows. A behavior aggregate flow can be viewed as a pipeline from one edge of the network to another edge of the network. Within each behavior aggregate flow, there could be hundreds of sessions between individual hosts. However, DiffServ is unconcerned with sessions within a behavior aggregate flow. Instead, DiffServ is concerned with allocation of bandwidth between the behavior aggregate flows. According to DiffServ, excess bandwidth is to be allocated fairly between behavior aggregate flows. Furthermore, DiffServ provides criteria, discussed below, for measuring the level of service provided to each behavior aggregate flow.

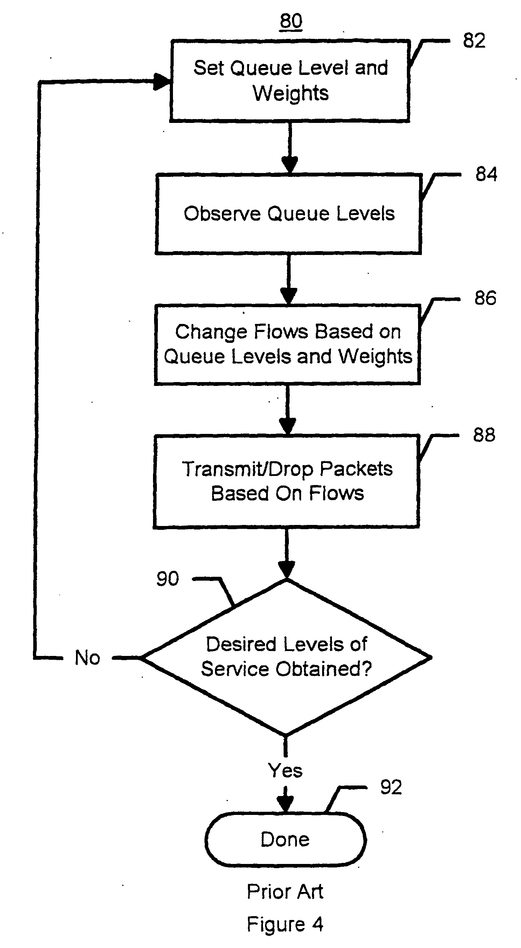

One conventional mechanism for providing different levels of services utilizes a combination of weights and a queue level to provide different levels of services, for example provided by Cisco Systems, Inc. of San Jose, California. Figure 4 depicts such a conventional method 80. The queue level thresholds and weights are set, via step 82. Typically, the queue level thresholds are set in step 82 by a network administrator tuning or "turning knobs." The weights can be set for different pipes, or flows, through a particular queue, switch 40 or network processor 42. Thus, the weights are typically set for different behavior aggregate flows. The queue levels are observed, typically at the end of a period of time known as an epoch, via step 84. The flows for the pipes are then changed based on how the queue level compares to the queue level threshold and on the weights, via step 86. Flows for pipes having a higher weight undergo a greater change in step 86. The flow for a pipe determines what fraction of traffic offered to a queue, such as the queue 56, by the pipe will be transmitted to the queue 56 by the corresponding enqueuing mechanism, such as the enqueuing mechanism 54. Traffic is thus transmitted to the queue or dropped based on the flows, via step 88. A network administrator then determines whether the desired levels of service are being met, via step 90. If so, the network administrator has accomplished congestion avoidance. However, if the desired level of service is not achieved then the queue level thresholds and, possibly, the weights are reset, via step 82 and the method 80 repeats. Further information relating to the conventional method 80 can be found at http://www.cisco.com/univercd/cc/td/doc/product/software/ios120/12cgcr/gos c/gcpart2/gcconman.htm.

Although the conventional method 80 functions, one of ordinary skill in the art will readily realize that it is difficult to determine what effect changing the queue level thresholds will have on particular pipes through the network. Thus, the network administrator using the method 80 may have to engage in a great deal of experimentation before reaching the desired flow rate for different customers, or pipes (behavior aggregate flows) in a computer network.

Furthermore, the method 80 indirectly operates on parameters that are typically used to measure the quality of service. Queue levels are not a direct measure of criteria typically used for service. Typically, for example in DiffServ (see IETF RFC 2475 and related RFCs), levels of service are measured by four parameters: drop rate, bandwidth, latency and jitter. The drop rate is the percentage of traffic that is dropped as it flows across a switch. The bandwidth of a behavior aggregate flow is a measure of the amount of traffic for the behavior aggregate flow which crosses the switch and reaches its destination. Latency is the delay incurred in sending traffic across the network. Jitter is the variation of latency with time. The queue levels are not considered to be a direct measure of quality of service. Thus, the method 80 does not directly address any of the criteria for quality of service. Thus, it is more difficult for a network administrator to utilize the method 80 for providing different levels of service. In addition, the method 80 controls flows for behavior aggregate flows. The method 80 is unable to control traffic at a finer level than this.

Another conventional method for example as disclosed in the European Patent Application EP-A-0 901 307 and published on 10 March 1999 for controlling traffic utilizes flows, minimum flows rates, weights, priorities, thresholds and a signal indicating that excess bandwidth, or ability to transmit traffic, exists in order to control flows. However, conventional methods are based upon intuition, and, while seemingly cogent, are not actually supported by a foundation from control theory. It is not clear that this conventional method is a stable mechanism for controlling traffic through the switch. Consequently, such conventional methods may not adequately control traffic through the switch 40.

In addition, another IETF proposal is known as IntServ, for integrated services. In IntServ, every flow in a network is controlled at all times. Thus, IntServ proposes controlling each individual flow within each behavior aggregate flow, or pipe, of the network. As a result, IntServ can be used to provide differentiated services. However, controlling all flows at all times rapidly becomes unworkable. In particular, the number of flows in a network rapidly grows as the network grows and as traffic through the network grows. For most networks, controlling each flow in the network at all times consumes an extremely large amount of resources and is difficult to implement. Consequently, IntServ can not adequately control traffic through a network.

Accordingly, what is needed is a system and method for better providing differentiated services and controlling flows at a fine level. The present invention addresses such a need.

## DISCLOSURE OF THE INVENTION

The present invention provides a method according to Claim 1, a computer readable medium according to Claim 12 and a system according to Claim 13 for controlling a plurality of sub-pipes in a pipe of a computer network including at least one switch, the plurality of sub-pipes utilizing the switch for transmitting traffic through the network, the method comprising the steps of: (a) allowing a minimum flow to be set for each of the plurality of sub-pipes; (b) determining whether congestion for the pipe;
(c) controlling a flow in a sub-pipe of the plurality of sub-pipes if congestion exists, comprising the steps: (c1) responsive to the flow for the sub-pipe being less than the minimum flow, linearly increasing, or leaving unchanged, the flow for the sub-pipe; and (c2) responsive to the flow for the sub-pipe being greater than the minimum flow, exponentially decreasing the flow for the sub-pipe. Thus the traffic through the switch is stable.

According to the system and method disclosed herein, the present invention provides a stable, workable mechanism for controlling traffic through a network at a fine level while allowing for differentiated services. In addition, the present invention can be used to control traffic through the network at the edge of the network, thereby allowing redundant controls within the network to be eliminated.

## BRIEF DESCRIPTION OF THE DRAWINGS

A preferred embodiment of the present invention will now be described with reference to the following drawings:

Figure 1 is a block diagram of computer networks according to the prior art;

Figure 2 is a high-level block diagram of a switch according to the prior art;

Figure 3A is a simplified block diagram of a switch according to the prior art;

Figure 3B is a simplified block diagram of another switch according to the prior art;

Figure 4 is a flow chart depicting a conventional method for providing different levels of service through a switch according to the prior art;

Figure 5 is a diagram depicting networks in which the present invention could be used;

Figure 6 is a high-level flow chart depicting a method in accordance with the present invention for controlling traffic and providing different levels of service in sub-pipes;

Figures 7A and 7B depict a more detailed flow chart depicting a method in accordance with the present invention for controlling traffic and providing different levels of service in sub-pipes;

Figure 8 is a detailed flow chart depicting a first embodiment of a method in accordance with the present invention for determining whether congestion exists in a pipe;

Figure 9 is a detailed flow chart depicting a second embodiment of a method in accordance with the present invention for determining whether congestion exists in a pipe;

Figure 10 is a detailed flow chart depicting a third embodiment of a method in accordance with the present invention for determining whether congestion exists in a pipe; and

Figure 11 is a detailed flow chart depicting a fourth embodiment of a method in accordance with the present invention for determining whether congestion exists in a pipe.

## DESCRIPTION OF THE PREFERRED EMBODIMENT

The present invention will be described in terms of a particular system and particular components. However, one of ordinary skill in the art will readily recognize that this method and system will operate effectively for other components in a computer network. The present invention will also be described in the context of a queue. However, one of ordinary skill in the art will readily recognize that the present invention functions effectively when queues are logical queues part of a single memory resource or when the queues are part of separate memory resources. Furthermore, the present invention functions analogously when controlling flows into a subqueue of a particular logical queue. The present invention will also be discussed in terms of controlling network flows by proactively discarding packets. However, one of ordinary skill in the art will readily realize that the method and system control the rate of packets arriving in a queue and that a signal sent to a source and dictating a fraction of packets to be sent, with others held at the source, would be effective. Therefore, control of a transmit fraction is analogous control of a rate at which packets are offered, for example by one or more sources. Furthermore, the present invention will be described in terms of pipes and sub-pipes to a queue. However, one of ordinary skill in the art will readily realize that the pipes could be behavior aggregate flows of different or the same class or any offered rate into a particular component which utilizes a queue for storage. The present invention will also be described in the context of controlling the sub-pipes of a particular pipe. However, one of ordinary skill in the art will readily realize that the present invention can be used to control the flows in sub-pipes of a plurality of pipes.

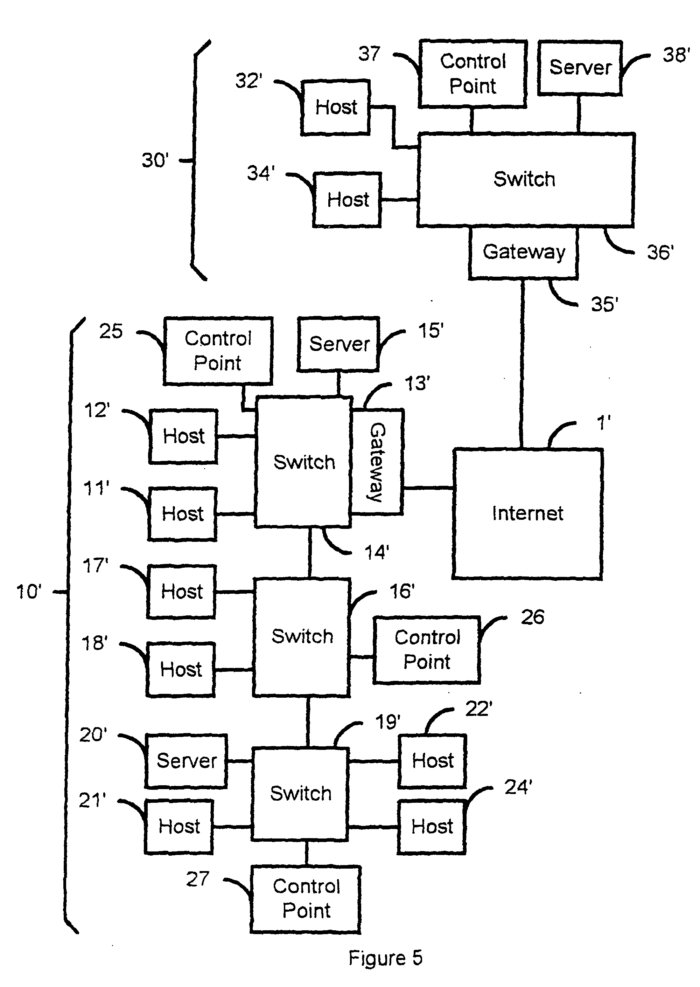

To more particularly illustrate the method and system in accordance with the present invention, refer now to Figure 5, depicting preferred embodiments networks 10' and 30' and the Internet 1' with which the present invention may be used. The networks 10' and 30' and the Internet 1' are substantially the same as the networks 10 and 30 and the Internet 1 depicted in Figure 1. However, also shown are control points 25, 26, 27 and 37. The control points 25, 26, 27 and 37 are preferably general-purpose computers coupled with switches 14', 16', 19' and 36'. The control points 25, 26, 27 and 37 preferably perform functions relating matrices and selection of bits to be used in testing filter rules, as discussed below. The switches 14', 16', 19' and 36' preferably include the software managed decision trees (not shown in Figure 5), as discussed below, and determine whether a key matches one or more of the filter rules using the decision trees. In addition, the switches 14', 16', 19' and 36' are preferably the same as the switches 40 and 40' depicted in Figures 2, 3A and 3B. Although the networks 10', 30' and the Internet 1' are preferably used, the networks 10 and 30 and the Internet 1 could also be used in conjunction with the present invention.

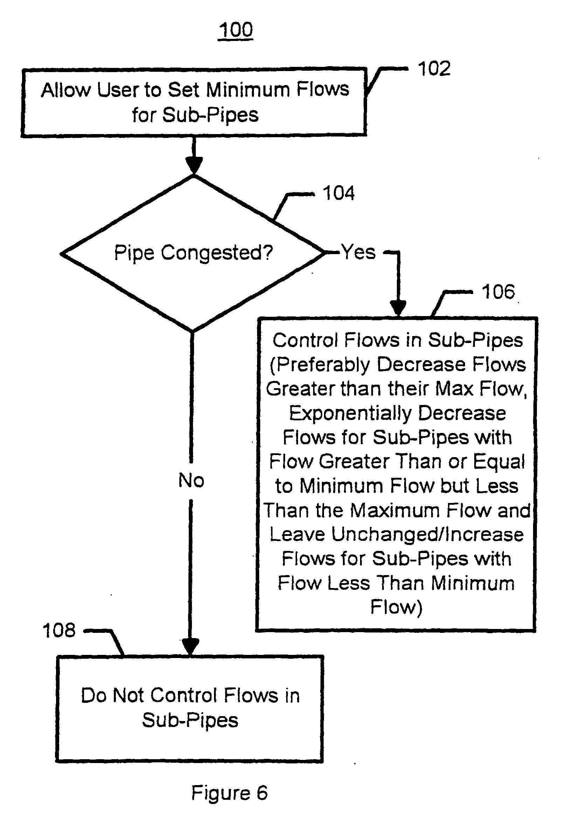

To more particularly illustrate the method and system in accordance with the present invention, refer now to Figure 6, depicting one embodiment of a method 100 in accordance with the present invention. The method 100 is preferably accomplished using the apparatus disclosed in European Published Application no. 1226509 entitled "NETWORK PROCESSING COMPLEX AND METHODS" and assigned to the assignee of the present application.

The method 100 can be used with the switch 40 or 40' shown in Figures 2, 3A and 3E. Thus, the method 100 can be carried out in a switch 40 having multiple blades 47, 48 and 49 and multiple ports on each blade 47, 48 or 49. For the purposes of clarity, the method 100 will be explained in conjunction with the queue 74 and enqueuing mechanism 72 depicted in Figure 3A. However, the method 100 can be used with other queues, such as the queues 56, 62, 68, 56', 62', 68' and 74'. The method 100 can also be used with other enqueuing mechanisms, such as the enqueuing mechanisms 54, 60, 66, 54', 60', 66' and 72'. In a preferred embodiment, the method 100 is used in a system in which multiple queues are part of the same memory resource. However, nothing prevents the method 100 from being used in another system in which each queue has a separate memory resource. The method 100 is preferably used in a switch residing at the edge of the network, such as the switch 14 or 14' depicting in Figures 1 and 5. In addition, the method 100 is preferably only used in switches residing at the edge of the network, not switches in the interior of the network. In addition, although the method 100 is preferably used in controlling sub-pipes to a queue and performed using an enqueuing mechanism, nothing prevents the use of the method 100 by other portions of the switch.

The method 100 is used to control the flows for sub-pipes in a network. Each sub-pipe is part of a pipe. The pipes also flow through the network. Thus, a pipe for a particular network can be considered to terminate at an edge of the network. Preferably, each pipe is a behavior aggregate flow. A sub-pipe is some combination of the flows in the pipe. Thus, a sub-pipe can also be considered to terminate at the edge of the network. In other words, pipes and sub-pipes are defined within the network. A sub-pipe could include a single flow or could include some combination of flows in the pipe. The method 100 is also preferably used only at switches the edges of the network, where the sub-pipes and, therefore, the pipe terminates. However, the method 100 could also be used in switches in the interior of the network.

Referring to Figures 3A and 6, the minimum flows for sub-pipes of certain pipes providing traffic to the switch 40 are set, via step 102. The minimum flow set in step 102 is preferably the minimum flow guaranteed to be provided for the sub-pipe. Thus, the minimum flow set in step 102 corresponds to the amount of bandwidth the sub-pipe will always be allowed to consume. Thus, the minimum flows are preferably set such that if each sub-pipe carries a flow equal to the minimum flow, the pipe will not be congested and traffic will travel through the switch and the network within desired parameters. When traffic through the sub-pipe is light, the sub-pipe may carry less traffic than the minimum flow. Sub-pipes might also be allowed to carry more traffic than the minimum flow. Also in a preferred embodiment, a maximum possible flow can also be set, possibly for use against denial of service attacks. In a preferred embodiment, the minimum flows are set for the sub-pipes entering a particular queue, such as the queue 74. In addition, each sub-pipe preferably offers traffic to the queue 74 at an offered rate, $I_i(t)$, where i denotes the $i^{th}$ sub-pipe. Depending on different factors, some of the traffic may be dropped in lieu of entering the queue. The transmit fraction for the $i^{th}$ sub-pipe, $T_i(t)$, is the fraction of traffic from the $i^{th}$ sub-pipe which is transmitted to the queue 74'. Thus, the instantaneous flow for the $i^{th}$ sub-pipe is $f_i(t) = I_i(t)*T_i(t)$.

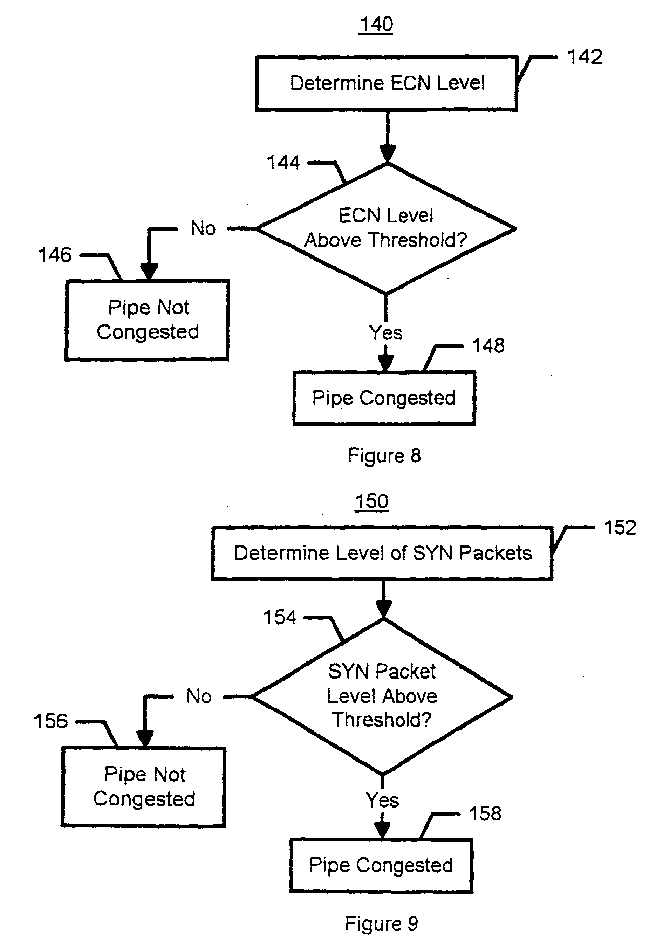

It is determined whether the pipes for which the sub-pipes may be controlled are congested, via step 104. A particular pipe can be determined to be congested based on a variety of factors. These factors are typically evaluated based on the packets, or traffic, flowing through the pipe. Note that packets as used herein refer to a variety of types of data packets including, but not limited to Ethernet packets (usually termed frames), ATM packets (usually termed cells) and IP packets (usually termed packets). Some of the factors which may determine whether or not a pipe is congested can include the time taken for a particular packet to be sent from a sender to a recipient and for the recipient to send back a confirmation, the number of synchronization packets, round trip time (RTT) and an explicit congestion notification (ECN), which may be provided for packets, as discussed below with respect to Figures 8-11. Referring back to Figure 6, in general, a pipe may be considered to be congested when the pipe carries sufficient traffic that packets are delayed or dropped at a rate that is considered to be unacceptable by a user such as a network administrator.

If it is determined that congestion does not exist, then the flows in the sub-pipes are not controlled, via step 108. Thus, the switch 40 need not expend resources in attempting to control flows in sub-pipes when the performance of the pipes is considered acceptable. If, however, it is determined that congestion does exist, then the flows for sub-pipes are controlled for a specified amount of time, T, via step 106. The specified amount of time T for sub-pipe control is typically many multiples (perhaps one thousand or one million) of the time increment Dt for updating transmit fractions. Thus, during T, if a congestion signal currently indicates congestion, then flows in those sub-pipes above their guaranteed minimum rates are reduced exponentially so long as congestion persists and the flows remain above the guaranteed minimum rates. In addition, note the distinction between T, which refers to the time interval for controlling flows in sub-pipes, and $T_i$, which refers to the transmit fraction for a particular sub-pipe. In a preferred embodiment, step 106 includes exponentially decreasing the flows for sub-pipes having flows that are greater than the corresponding minimum flows set in step 102. Thus, a flow for a sub-pipe is decreased in proportion to the sub-pipe flow value. Also in a preferred embodiment, step 106 can include leaving unchanged, at least initially, the flows for sub-pipes having flows that are less than or equal to the corresponding minimum flows. However, during the time interval T, if congestion momentarily is not indicated, then flows in those sub-pipes below their maximum rates are allowed to increase linearly. In particular, as the sub-pipes continue to be controlled, those sub-pipes having flows below their set minimum are left unchanged or allowed to linearly increase, those sub-pipes above their maximum flow, if set, are forced to decrease, and those sub-pipes having flows between their minimum and maximum flows are allowed to linearly increase or forced to exponentially decrease. This is particularly true as the flows continue to be controlled in step 106. Because the flows are exponentially decreased and may be linearly increased, the flows for the sub-pipes are controlled in a stable manner. Step 106 preferably includes setting the transmit fraction for the sub-pipes to be controlled. Also in step 106, the number of packets for a sub-pipe entering the queue is controlled using the transmit fraction.

Thus, the method 100 control flows in sub-pipes of a pipe only when that pipe is congested. As a result, the method 100 does not unnecessarily consume resources when congestion does not exist and, therefore, traffic flows through a network as desired. Furthermore, because the method 100 can linearly increase and exponentially decrease the flows in sub-pipes, control of flows through the sub-pipes will be stable. The method 100 is also preferably implemented only at the edge of a network, such as in the switch 14' of the network 10' depicted in Figure 5. However, pipes and, therefore, sub-pipes flow through the entire network 10'. Thus, the method 100 of Figure 6 controls congestion for the entire pipe of a network by controlling the sub-pipes at the edge of the network. The method 100 need not be implemented at other points in the network. Thus, redundant control of sub-pipes, which is computationally expensive and unnecessary, can be avoided. However, the method 100 can be used in conjunction with other mechanisms for controlling traffic in a network, even when such other mechanisms are implemented in the core and/or the edge of the network.

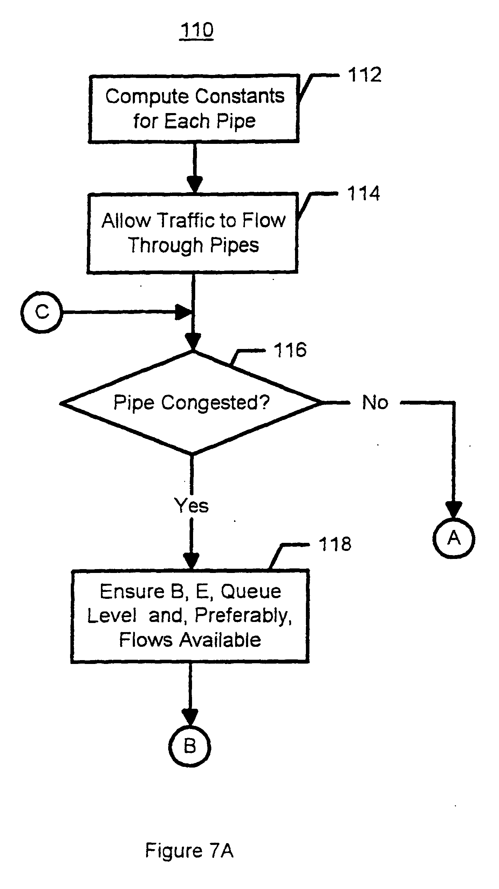

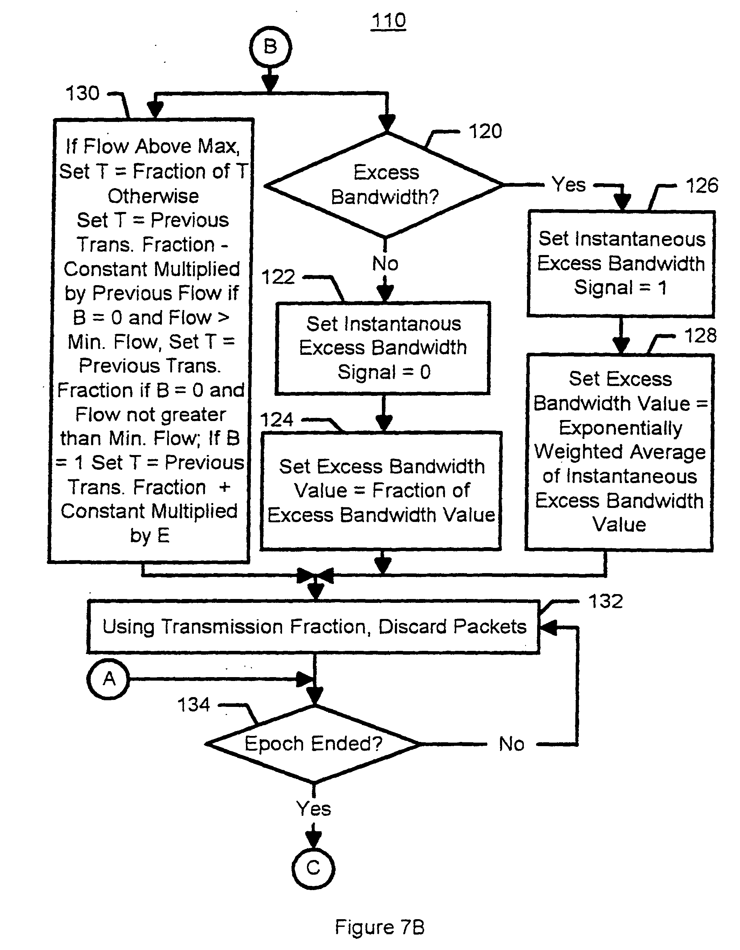

Figures 7A and 7B depict a more detailed flowchart of one embodiment of a method 110 for controlling flows in sub-pipes in accordance with the present invention. The method 110 preferably commences after the minimum flows for the sub-pipes to be controlled have been set.

The method 110 will also be described in the context of controlling the flows for sub-pipes of a particular pipe. However, one of ordinary skill in the art will readily realize that the method 110 can be extended for use with multiple pipes. In addition, the method 110 is similar to the method 100 and thus may be carried out using the same apparatus. After the minimum flows for the sub-pipes are set, constants are computed for each of the sub-pipes based on the minimum and, if set, the maximum flows for the sub-pipe, via step 112. For each sub-pipe, i, a constant $C_i$ and a constant $D_i$ are computed in step 112. The constant $C_i$ is used for linearly increasing the flow for sub-pipe i, as discussed below. Similarly, the constant $D_i$ is used for exponentially decreasing the flow for the sub-pipe i, as discussed below. In a preferred embodiment, the constants $C_i$ and $D_i$ are both based on the minimum flows. In an alternate embodiment, weights for different sub-pipes can also be provided. In such a case, the constant $C_i$ and $D_i$ may also be calculated based on the weights provided.

Once the constants are determined, traffic is allowed to flow through the sub-pipes to the queue 74, via step 114. It is then determined whether the pipe is congested, via step 116. In a preferred embodiment, step 116 is carried out through the use of a pipe congestion level (PCL) signal for each pipe being monitored. The PCL for a pipe can be between zero and one. The closer the PCL is to one, the more congested the pipe is. Thus, a threshold between zero and one might be set as the threshold for congestion. Step 116 would determine the PCL for the pipe. If the PCL for a pipe is less than or equal to this threshold, then step 116 would indicate that congestion does not exist. If the PCL is greater than the threshold, then step 116 would determine that congestion exists in the pipe. If there is no congestion, then it is determined whether an epoch, a time period over which control may be desired to be exercised, has ended, via step 134. Thus, if there is no congestion, then the flows in sub-pipes may not be controlled.

If it is determined in step 116 that congestion exists, then the flows in sub-pipes are controlled, via steps 118 through 132. The queue level, an instantaneous excess bandwidth signal, B, with binary value 0 or 1, and the excess bandwidth value, E, a number with value in the interval [0,1], are determined for the prior epoch if not already available, via step 118. In a preferred embodiment, the flows of the sub-pipes for the prior epoch are also made available in step 118. In other words, step 118 determines the quantities necessary to update the system in the method 110. In a preferred embodiment, step 118 is usually unnecessary because the above-mentioned quantities were determined using the method 110 in a previous epoch. The queue level is the level of the queue into which the sub-pipes are flowing. The queue level may be defined as a fraction of the maximum queue level. For example, the queue level may be the fractional level of fullness for the queue 74 cf Figure 3A. Referring back to Figures 7A and 7B, on a preferred embodiment, the queue level determined is the level for the entire memory resource. However, nothing prevents the queue level being determined for a logical queue or subqueue. The instantaneous excess bandwidth signal, B with binary value "0" or "1" and excess bandwidth value,.E, a number with value in the interval [0,1] are discussed below.

It is determined whether excess bandwidth exists, via step 120. In one embodiment, excess bandwidth is determined to exist only if the queue level for the queue, such as the queue 74, is zero, or is below a small value or is decreasing. However, preferably the determination of whether excess bandwidth exists can also depend upon round trip time, or other parameter, or a single determination of the change in such a measurement. These other parameters can also be used to measure congestion as described below. Thus, in a preferred embodiment, two definitions of congestion can be considered to be used. The first definition of congestion, in step 116, is used to trigger control over the flows of sub-pipes. The second definition of congestion can be used in step 120 to determine whether excess bandwidth exists. The second definition of congestion used in step 120 may be different from the first definition of congestion. For example, the second definition of congestion in step 120 may consider congestion to exist at a lower flow rate than the first definition of congestion used in step 116. In addition, the definition of excess bandwidth, as well as the second definition of congestion, can change over the time interval, T. For example, early in the time interval T, the definition of excess bandwidth could include a measurement of congestion to ensure that the flows in sub-pipes will be controlled to reduce congestion. Later in the time interval T, the definition of excess bandwidth could change to exclude congestion, raise the flow required for congestion to be considered to exist and/or rely only on other parameters, such as the queue level. In particular, the difference between the queue level and maximum buffer capacity (called headroom) could be used to define congestion. However, nothing prevents the use of another criteria for determining whether excess bandwidth exists. In general, the instantaneous excess bandwidth signal indicates whether during the previous epoch additional resources existed in the switch 40, or throughout the pipe, to handle additional traffic. If excess bandwidth does not exist, then an instantaneous excess bandwidth signal, B, is set to zero, via step 122. The signal B is termed instantaneous because it is based upon a single measurement of the queue level, round trip time, or other parameter, or a single determination of the change in such a measurement. Thus, because the definition of excess bandwidth can depend upon congestion, the instantaneous excess bandwidth signal, 3, can also depend upon congestion as used in determining whether excess bandwidth exists. An excess bandwidth value, E, is then exponentially increased toward one (e.g. if no congestion) or decreased toward zero (e.g. if congestion), via step 124. In a preferred embodiment, the excess bandwidth value is an exponentially weighted average of the instantaneous excess bandwidth signal. Thus, the excess bandwidth value provides a measure of available resources over previous epochs. In addition, because the excess bandwidth value, E, depends upon the instantaneous excess bandwidth signal, B, the excess bandwidth value, E, may also depend upon the existence of congestion, as used in determining whether excess bandwidth exists.

If it is determined in step 120 that excess bandwidth does exist, then the instantaneous excess bandwidth value is set to one, via step 126. The excess bandwidth value is then set to an exponentially weighted average of the instantaneous excess bandwidth signal, via step 128. In a preferred embodiment, the excess bandwidth value is a first constant multiplied by a previous excess bandwidth value plus a second constant multiplied by the instantaneous excess bandwidth value. The values of the instantaneous excess bandwidth signal, B, and the excess bandwidth value, E, set in steps 122 and 124 or steps 126 and 128 will preferably be used in a next epoch to update control of the flows for the sub-pipes.

In a preferred embodiment, the transmit fraction for each sub-pipe i is set, via step 130, in parallel with the steps 120 through 128. However, in an alternate embodiment, the transmit fraction can be updated serially with the instantaneous excess bandwidth signal, B, and the excess bandwidth value, E. If the flow for the pipe is above a maximum level, then the flow is exponentially decreased, preferably by setting the transmit fraction to be 31/32 multiplied by the previous transmit fraction. If the flow for the sub-pipe is not above a maximum, then the transmit fraction is altered as follows. If the previous instantaneous excess bandwidth signal, B, was one (excess bandwidth available), then step 130 would set the transmit fraction for each sub-pipe i based on the previous transmit fraction, the constant $C_i$, and the excess bandwidth value. Preferably, the transmit fraction set in step 130 for excess bandwidth previously existing is:

$$T_i(t + Dt) = T_i(t) + C_i*E(t)Dt$$

Where:
Dt = Length of an epoch (time since transmit fraction last calculated)

Preferably, the flow units are set so that Dt and the maximum possible queue level, $Q_{max}$, are one. Thus, the transmit fraction for a sub-pipe may linearly increase if excess bandwidth exists. Furthermore, the transmit fraction may continue to linearly increase as long as excess bandwidth continues to exist. However, it is noted that in a preferred embodiment, when the sub-pipes are first controlled (when it is first determined that congestion exists in the pipe) there will generally be no excess bandwidth. Consequently, the flows for sub-pipes will not be increased. Thus, the decision to control sub-pipes, made in step 116, is based upon one definition of the onset of congestion in the pipe. The sub-pipe control is enforced for a time interval T that is generally many multiples of the time increment for an epoch, Dt. Initially, during T, the flows for the sub-pipes are likely to be forced to decrease in response to the above mechanism based upon, in general, a second definition of congestion within the pipe. This second definition of congestion is used in determining whether excess bandwidth exists, at least during the early stages of the time interval T. However, there may be moments during the interval T when sub-pipe flow rates actually increase. This is particularly true near the end of the time interval T, after a certain number of epochs have expired. Thus, one definition of congestion may be used to commence control of flows in the sub-pipes. A second definition of congestion may be used in defining excess bandwidth to allow the instantaneous excess bandwidth signal, B, to be zero or one, allowing flows in sub-pipes to both increase and decrease during the time interval T.

If excess bandwidth did not exist in the previous epoch (B was zero) and the sub-pipe carries more traffic than its minimum flow, then in step 130 the transmit fraction, $T_i(t + Dt)$ for a sub-pipe i is set based on a previous transmit fraction for the sub-pipe, $T_i(t)$, $D_i$, and the previous flow for the sub-pipe, $f_1(t)$. The transmit fraction for B = 0 for a sub-pipe carrying a higher flow than its minimum flow is preferably given by:

$$T_i(t + Dt) = T_i(t) - D_i*f_i(t)$$

In addition, when B = 0, the transmit fraction for a sub-pipe carrying its minimum flow or less is preferably given by:

$$T_i(t + Dt) = T_i(t)$$

Thus, the transmit fraction set in step 130 ensures that the transmit fraction for sub-pipes carrying greater than their minimum flows and, therefore, the flows for such sub-pipes exponentially decrease as long as excess bandwidth continues not to exist. The constants $C_i$ and $D_i$ are preferably based on minimum flow values. In addition, in a preferred embodiment, when control is first imposed, excess bandwidth will not exist because of the congestion in the pipe. Consequently, the flows for sub-pipes exceeding their minimum flows will be exponentially decreased through the use of the transmit fraction. Flows for sub-pipes not exceeding their minimum flows will be left unchanged when excess bandwidth is not available. Congestion can thus be controlled because the minimum values set for the sub-pipes are preferably set such that if each sub-pipe carries a flow equal to the minimum flow congestion will not exist. Thus, for congestion to exist, at least one sub-pipe carries a flow which is greater than its minimum flow. Consequently, exponentially reducing the flows for such sub-pipes should remedy congestion. As discussed above, when excess bandwidth does become available, the flows for all sub-pipes may be linearly increased. Thus, congestion may be controlled and the flows for sub-pipes regulated in a stable manner.

Using the transmit fraction calculated in step 130, packets passing through the switch 40 are transmitted or dropped during the epoch, via step 132. Packets are preferably discarded by not allowing the packets to enter a particular queue, such as the queue 74. In a preferred embodiment, packets are dropped based not only on the transmit fraction for the sub-pipe in which they are flowing, but also on the priority of each packet. In another embodiment, the packets are dropped randomly. In addition, instead of using the transmit fraction, a discard fraction can be used. The discard fraction for a sub-pipe is one minus the transmit fraction. Thus, the discard fraction indicates the fraction of packets that should be dropped in order to obtain the desired transmit fraction, or traffic flow, for a particular sub-pipe.

It is determined whether the epoch is completed, via step 134. If not, then traffic continues to be transmitted based on the same transmit fractions, via step 132. If the epoch has finished, then the method repeats commencing with step 116. However, in one embodiment when the method 110 repeats, step 116 (determining whether congestion exists) may be skipped for a particular period of time or number of epochs. Skipping step 116 allows control of the flows in sub-pipes to continue for some amount of time after congestion no longer exists. In other words, skipping step 116 allows the time set to control the flows in sub-pipes, T, to expire. In such an embodiment, greater control over the sub-pipes is allowed, and the flows in sub-pipes are allowed to increase to ensure that excess bandwidth is allocated.

The length of an epoch, Dt, over which the method 110 is performed is preferably set prior to commencement of the method 110. However, in an alternate embodiment, the length of an epoch could change. In addition, the time scale for an epoch is preferably relatively long, perhaps on the order of one to ten milliseconds or more. The length of an epoch should be set in order to account for delays between ends of the pipe and sub-pipes. This is because control over the sub-pipes in the method 110 can change at the end of an epoch, depending on whether congestion exists and whether the excess bandwidth is available. In order to ensure that the control performed in an epoch has an opportunity to clear congestion in the pipe and that the appropriate feedback can be provided to the method 100 or 110, a sufficient time should be allowed for a packet to reach its destination and provide a notification, if any, as to whether the destination has been reached. In other words, the length of an epoch should be large enough to allow the change in the transmit fraction tc take effect and provide the system with information as to the affects of the transmit fraction.

Because the method 110 increases flows linearly and decreases flows exponentially, the method 110 functions similarly to the method 100 and provides many of the same benefits. Thus, the method 110 can ensure that the traffic through sub-pipes can automatically and asymptotically reach stability. Furthermore, the increase and decrease in the flow for each pipe will depend upon the minimum flow for the pipe and the previous flow for the pipe. Thus, different pipes may have different levels of flow, or service. Consequently, the method 110 can produce stable behavior, allocate excess bandwidth fairly and provide differentiated services. Note, however, that although the method 110 allocates excess bandwidth fairly, the flows through sub-pipes and congestion in the pipe can be controlled without allowing for fair allocation of resources. In order to provide different levels of services for different sub-pipes, or customers, all a network administrator or other user must do is set different minimum flows and, if desired, the maximum flows for customers depending upon the level of service desired for the particular customer. Thus, the method 110 can be used in a variety of applications, such as in networks using DiffServ, by internet service providers desiring to provide different levels of service to different customers or for different media.

In addition, the methods 100 and 110 might be used only at the edges of the network controlled using the methods 100 or 110. For example, for the network 10', the methods 100 and 110 may be performed only at the switch 14', that is at the ingress of a pipe. Thus, the control of flows through sub-pipes, which is relatively computationally expensive, need not be carried out throughout the entire network 10'. However, pipes and sub-pipes in the network 10' are generally defined through the entire network 10'. Thus, by controlling the flows for sub-pipes only at the edge, it can be ensured that the corresponding pipe is not congested throughout the entire network 10'. Thus, congestion is controlled without having to perform redundant calculations and controls on sub-pipes throughout the network. However, other, preferably simpler, methods of control might be used in conjunction with the methods 100 and 110, both in the same switch and in other switches of the network. For example a method for controlling the flows in pipes is described in co-pending PCT Patent Application Serial No. GB00/04410 and entitled "METHOD AND SYSTEM FOR CONTROLLING TRANSMISSION OF PACKETS IN COMPUTER NETWORKS" and assigned to the assignee of the present invention. The method for controlling the flows in pipes described in the above-mentioned co-pending application could be used with the present invention. Thus, at least two levels of control could be provided, a finer level for sub-pipes, and a coarser level for pipes.

A variety of mechanisms can be used in determining whether congestion exists in steps 104 and 116 of the methods 100 and 110, respectively, depicted in Figures 6, 7A and 7B, respectively. Figures 8-11 depict embodiments of such methods for determining whether congestion exists in a particular pipe. However, the methods depicted in Figures 8-11 could be used for multiple pipes, could be combined, and other methods (not shown) could be used. In addition, the methods depicted in Figures 8-11 could be used for the second definition of congestion that may be used in step 120 of the method 110 for determining whether excess bandwidth exists.

Figure 8 depicts one embodiment of a method 140 for determining whether congestion exists. The method 140 utilizes ECN. ECN is described in IETF proposal RFC 2481 that is appropriate for protocols, such as TCP. In ECN, two unused bits in a packet are employed to indicate congestion. A switch which is ECN enabled and through which the packet travels sets the first bit. The ECN enabled switch through which the packet passes sets the second bit if the ECN enabled switch is congested. Thus, the combination of bits indicates whether at least one switch in the sub-pipe through which the packet flows is congested. These bits are typically set as the packet travels from its source to its destination. When the recipient (destination) sends back an acknowledgement, the resultant of the two bits are saved and provided back to the source (sender). Thus, ECN as represented by the two bits can be used to determine whether the pipe is congested.

In particular, some measure of the number of packets which ECN indicates passed through congested switches is determined, via step 142. In one embodiment, step 142 includes determining the fraction of packets traveling through the pipe which ECN indicates passed through a congested switch. This fraction could be used as the PCL, discussed above. It is then determined whether congestion exists as defined for ECN, via step 144. In one embodiment, step 144 includes determining whether the fraction of packets which ECN indicates passed through a congested switch is greater than some threshold. However, some other statistical measure of congestion using ECN can be employed. If it is determined that the threshold is not exceeded, then the pipe is defined to not be congested, via step 146. If it is determined that the threshold is exceeded, then the pipe is defined to be congested, via step 148. Thus, it can be determined using the method 140 whether or not the pipe is congested.

Figure 9 depicts another embodiment of a method 150 for determining whether a pipe is congested. The method 150 utilizes synchronization (SYN) packets. In TCP, a SYN packet can indicate a start of a session between two components, such as hosts. When a packet for a session does not reach its destination, for example because the packet is dropped due to congestion, a new session is started between the components. Thus, a new SYN packet will be issued. The SYN packet can thus be used to measure congestion in a pipe because they can be used to measure the number of starts and restarts of sessions..

Some measure of the number of SYN packets in the pipe is determined, via step 152. In one embodiment, step 152 includes determining the fraction of SYN packets to the total number of packets traveling through the pipe. This fraction could be used as the PCL, discussed above. It is then determined whether congestion exists as defined for the SYN packets, via step 154. In one embodiment, step 154 includes determining whether the fraction of SYN packets to the total number of packets is greater than some threshold. However, some other statistical measure of congestion using SYN packets can be employed. If it is determined that the threshold is not exceeded, then the pipe is defined to not be congested, via step 156. If it is determined that the threshold is exceeded, then the pipe is defined to be congested, via step 158. Thus, it can be determined using the method 150 whether or not the pipe is congested.

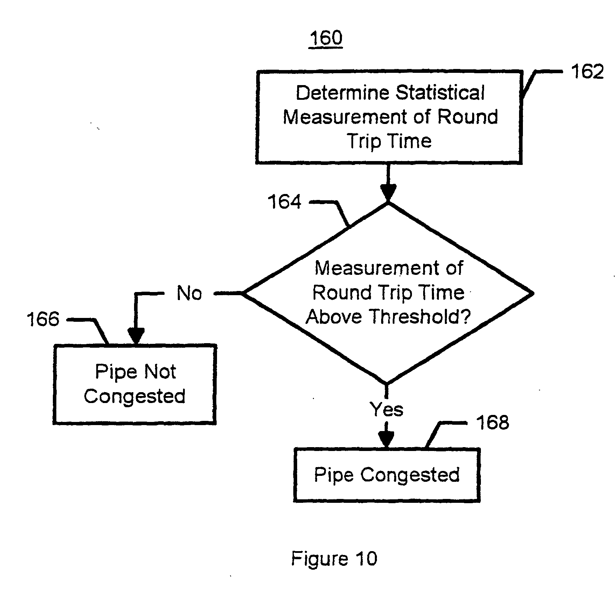

Figure 10 depicts another embodiment of a method 160 for determining whether a pipe is congested. The method 160 utilizes the round trip time (RTT) for packets to travel between their source (sender) and destination (recipient) and to provide a notification back to the source that the packet has been received. When a packet for a session does not reach its destination, for example because the packet is dropped due to congestion, or when the packet takes a long time to reach the destination, the RTT will be long. Longer RTT indicates more congestion in the pipe. Thus, the length of RTT can be used to measure congestion in a pipe. In addition, the time from sender to recipient, rather than the RTT could be used.

Some statistical measure of the RTT for packets in the pipe is determined, via step 162. In one embodiment, step 162 could include determining the fraction of packets having a RTT longer than some average value. However, nothing prevents the use of another statistical measure of RTT. This statistical measure of RTT could be used to determine the PCL, discussed above. It is then determined whether congestion exists as defined for the RTT, for example by determining whether the measure of RTT is above a threshold, via step 164. If it is determined that the measure of RTT indicates that the pipe is not congested, then the pipe is defined to not be congested, via step 1.66. If it is determined that the measure of the RTT indicates that the pipe is congested, then the pipe is defined to be congested, via step 168. Thus, it can be determined using the method 160 whether or not the pipe is congested.

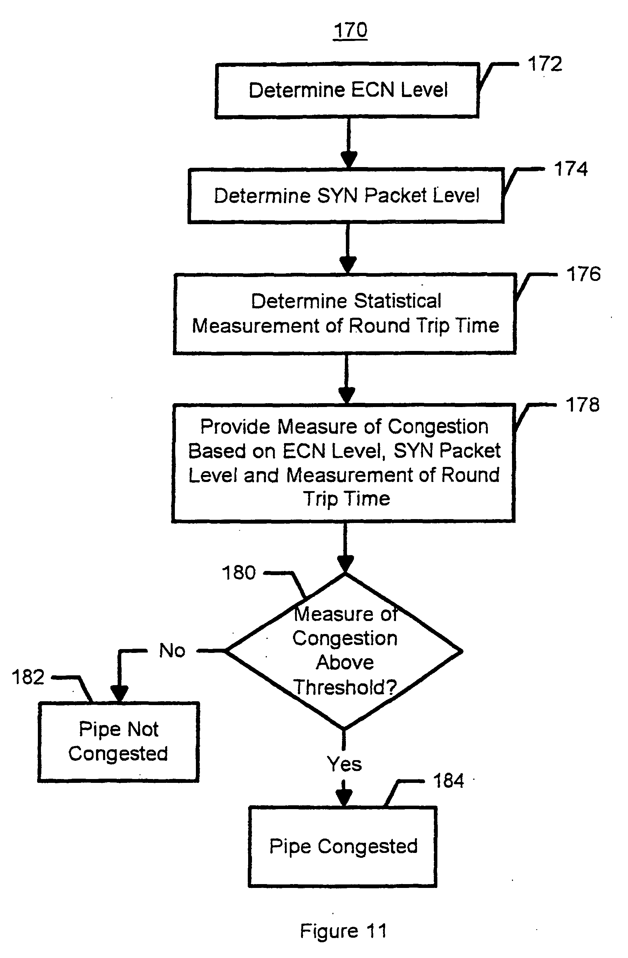

Figure 11 depicts an embodiment of a method 170 in which a combination of ECN, SYN packets and RTT could be used to determine whether a pipe is congested. A measure of the number of packets which ECN indicates passed through congested switches is determined, via step 172. In one embodiment, step 172 includes determining the fraction of packets that ECN indicates passed through a congested switch. A measure of the number of SYN packets in the pipe is determined, via step 174. In one embodiment, step 174 includes determining the fraction of SYN packets to the total number of packets traveling through the pipe. Some statistical measure of the RTT for packets in the pipe is determined, via step 176. The measurements for ECN, SYN packets and RTT are then combined to provide a measure of congestion, such as the PCL, via step 178. It is then determined whether congestion exists, preferably by determining whether the PCL exceeds a threshold, via step 180. If it is determined that the PCL indicates that the pipe is not congested, then the pipe is defined to not be congested, via step 182. If it is determined that the PCL indicates that the pipe is congested, then the pipe is defined to be congested, via step 184. Thus, it can be determined using the method 170 whether or not the pipe is congested.

Thus, a variety of methods can be used to determine whether a pipe is congested. If the pipe is congested, then the flows for the sub-pipes within the pipe are controlled. Otherwise, the flows are not controlled on the sub-pipe level. The flows in the sub-pipes are controlled by exponentially decreasing the flows and, in some cases, linearly increasing the flows. Thus, resources are expended in finely controlling flows at the level of sub-pipes only when the network is not performing as desired because congestion exists. Moreover, congestion can also be used in deciding how to finely tune the flows of sub-pipes, for example through a second definition of congestion used in determining whether excess bandwidth exists. In addition, different levels of service can be provided for different sub-pipes and, therefore, different pipes. Moreover, this level of control may be provided only at the edge of the network. Thus, redundant control of flows in sub-pipes becomes unnecessary. However, other methods of controlling traffic in the network can also be used.

A method and system has been disclosed for controlling traffic in sub-pipes of a network. Software written according to the present invention is to be stored in some form of computer-readable medium, such as memory, CD-ROM or transmitted over a network, and executed by a processor.

**Claims**

1. A method for controlling a plurality of sub-pipes in a pipe of a computer network including at least one switch, the plurality of sub-pipes utilizing the switch for transmitting traffic through the network, the method comprising the steps of:

   (a) allowing a minimum flow to be set (102) for each of the plurality of sub-pipes;
   (b) determining whether congestion exists (104,116) for the pipe;
   (c) controlling a flow (106, 132) in a sub-pipe of the plurality of sub-pipes if congestion exists **characterised by** comprising the steps:

      (c1) responsive to the flow for the sub-pipe being less than the minimum flow, linearly increasing (106), or leaving unchanged, the flow for the sub-pipe; and
      (c2) responsive to the flow for the sub-pipe being greater than the minimum flow, exponentially decreasing (106) the flow for the sub-pipe.

2. The method of claim 1 further including the step of:

   (b1) determining if excess bandwidth exists (120); and wherein:

      the linearly increasing step (c1) is further responsive to excess bandwidth existing; and
      the exponentially decreasing step (c2) is further responsive to excess bandwidth not existing;

3. The method of claim 2 wherein the switch further includes a processor having a queue, the plurality of sub-pipes using the queue for transmitting traffic through the switch wherein the bandwidth determining step (b1) determines if excess bandwidth exists based on determining if excess bandwidth exists for the queue.

4. The method of claim 2 wherein the excess bandwidth determining step (b1) determines if excess bandwidth exists based on determining if a second type of congestion exists.

5. The method of any of claims 2 to 4 wherein:

   the excess bandwidth determining step (b1) further includes the step of:

      (b1i) setting an excess bandwidth value (128) to be an exponentially weighted average of previous excess bandwidth values; and
      the flow for the sub-pipe of the plurality of sub-pipes is an offered rate multiplied by a transmit fraction and wherein the linearly increasing step (c1) sets the transmit fraction (130) for the sub-pipe to be a previous transmit fraction plus a first quantity, the first quantity being a first constant multiplied by the excess bandwidth value, and the exponentially decreasing step (c2) sets the transmit fraction for the sub-pipe to be the previous transmit fraction minus a second quantity, the second quantity being the previous flow multiplied by a second constant.

6. The method of claim 5 wherein the first constant and the second constant depend upon the minimum flow for the pipe.

7. The method of claim 5 wherein the first constant is a weight multiplied a third quantity, the third quantity being a queue service rate plus the minimum flow for the pipe minus the sum of the minimum flow for each of the plurality of sub-pipes.

8. The method of any preceding claim wherein the traffic through the switch includes a plurality of packets and wherein congestion determining step (b) determines whether congestion exists based on an Explicit Congestion Notification (ECN) (140) for each of a first portion of the plurality of packets.

9. The method of any of claims 1 to 7 wherein the traffic through the switch includes a plurality of packets and wherein congestion determining step (b) determines whether congestion exists based on a portion of the plurality of packets (150), the portion of the plurality of packets including a plurality of synchronization packets.

10. The method of any of claims 1 to 7 wherein the traffic through the switch includes a plurality of packets, each of the plurality of packets being initiated by a sender and received by a recipient and wherein congestion determining step (b) determines whether congestion exists based on a round trip time between the sender and the recipient (160) for each of the plurality of packets.

11. The method of any of claims claim 1 to 7 wherein the traffic through the switch includes a plurality of packets, each of a first portion of the plurality of packets being initiated by a sender and received by a recipient, and wherein congestion determining step (b) determines whether congestion exists based on an Explicit Congestion Notification (ECN) for each of a second portion of the plurality of packets, a round trip time between the sender and the recipient for each of the first portion of the plurality of packets, and a third portion of the plurality of packets, the third portion of the plurality of packets including a plurality of synchronization packets (170).

12. A computer-readable medium containing a program for controlling a plurality of sub-pipes in a pipe of a computer network including at least one switch, the plurality of sub-pipes utilizing the switch for transmitting traffic through the network, the program including instructions for carrying out all the steps of the method as claimed in any of claims 1 to 11 when executed on a computer.

13. A system for controlling a plurality of sub-pipes for a pipe in a computer network including a switch crossed by the plurality of sub-pipes, the system comprising:

a queue for use by the plurality of sub-pipes in transmitting traffic through the switch; and an enqueuing mechanism, coupled with the queue, for controlling traffic through the switch using a minimum flow set for each of the plurality of sub-pipes by a user, and **characterised by** the enqueuing mechanism for determining if congestion exists for the pipe and for controlling a flow in a sub-pipe of the plurality of sub-pipes only if congestion exists such that the flow for the sub-pipe may be linearly increased if the flow for the sub-pipe of the plurality of sub-pipes is less than the minimum flow and such that the flow for the sub-pipe of the plurality of sub-pipes is exponentially decreased if the flow is greater than the minimum flow, such that the traffic through the switch is stable.

14. The system of claim 13 wherein the enqueuing mechanism further determines whether excess bandwidth exists and increases or decreases the flow for each of the plurality of sub-pipes based on whether or not excess bandwidth exists.

15. The system of claim 14 wherein enqueuing mechanism determines whether excess bandwidth exists by determining whether a second type of congestion exists, indicating that the excess bandwidth exists if the second type of congestion exists and indicating that excess bandwidth does not exist otherwise.

**Patentansprüche**

1. Verfahren zur Steuerung einer Vielzahl von Teilverbindungen einer Verbindung eines Rechnernetzwerks, das mindestens eine Vermittlungsstelle beinhaltet, wobei die Vielzahl der Teilverbindungen die Vermittlungsstelle zur Übertragung von Verkehr durch das Netzwerk nutzt, wobei das Verfahren die folgenden Schritte umfasst:

(a) Zulassen, dass für jede der Vielzahl der Teilverbindungen ein Mindestdatenstrom festgelegt (102) wird;

(b) Feststellen, ob die Verbindung überlastet ist (104, 116);

(c) wenn eine Überlastung vorhanden ist, Steuern eines Datenstroms (106, 132) in einer Teilverbindung der Vielzahl der Teilverbindungen, **dadurch gekennzeichnet, dass** dieser Schritt die folgenden Schritte umfasst:

(c1) als Reaktion darauf, dass der Datenstrom für die Teilverbindung geringer als der Mindestdatenstrom ist, wird der Datenstrom für die Teilverbindung linear erhöht (106) oder unverändert belassen; und

(c2) als Reaktion darauf, dass der Datenstrom für die Teilverbindung größer als der Mindestdatenstrom ist, wird der Datenstrom für die Teilverbindung exponentiell verringert (106).

2. Verfahren nach Anspruch 1, das des Weiteren den folgenden Schritt beinhaltet:

(b1) Feststellen, ob überschüssige Bandbreite vorhanden ist (120); und wobei:

der Schritt der linearen Erhöhung (c1) des Weiteren auf das Vorhandensein von überschüssiger Bandbreite anspricht; und

der Schritt der exponentiellen Verringerung (c2) des Weiteren auf das Nichtvorhandensein von überschüssiger Bandbreite anspricht.

3. Verfahren nach Anspruch 2, wobei die Vermittlungsstelle des Weiteren einen Prozessor enthält, der eine Warteschlange hat, wobei die Vielzahl der Teilverbindungen die Warteschlange zur Übertragung von Verkehr durch die Vermittlungsstelle nutzt, wobei der Schritt der Ermittlung der Bandbreite (b1) auf der Grundlage der Feststellung, ob für die Warteschlange überschüssige Bandbreite vorhanden ist, feststellt, ob überschüssige Bandbreite vorhanden ist.

4. Verfahren nach Anspruch 2, wobei der Schritt der Feststellung, ob überschüssige Bandbreite vorhanden ist (b1), auf der Grundlage der Feststellung, ob es eine zweite Art von Überlastung gibt, feststellt, ob überschüssige Bandbreite vorhanden ist.

5. Verfahren nach einem der Ansprüche 2 bis 4, wobei:

der Schritt der Feststellung, ob überschüssige Bandbreite vorhanden ist (b1), des Weiteren den folgenden Schritt beinhaltet:

(b1i) Festlegen eines Werts für überschüssige Bandbreite (128) als einen exponentiell gewichteten Durchschnitt von vorherigen Werten für überschüssige Bandbreite; und

wobei der Datenstrom für die Teilverbindung der Vielzahl der Teilverbindungen eine angebotene Geschwindigkeit ist, die mit einem Sendeanteil multipliziert wird, und wobei der Schritt der linearen Erhöhung (c1) den Sendeanteil (130) für die Teilverbindung als einen vorhergehenden Sendeanteil zuzüglich einer ersten Menge festlegt, wobei die erste Menge eine erste Konstante ist, die mit dem Wert für die überschüssige Bandbreite multipliziert wird, und wobei der Schritt der exponentiellen Verringerung (c2) den Sendeanteil für die Teilverbindung als den vorhergehenden Sendeanteil abzüglich einer zweiten Menge festlegt, wobei die zweite Menge der vorhergehende Datenstrom ist, der mit einer zweiten Konstante multipliziert wird.

6. Verfahren nach Anspruch 5, wobei die erste Konstante und die zweite Konstante von dem Mindestdatenstrom für die Verbindung abhängen.

7. Verfahren nach Anspruch 5, wobei die erste Konstante eine Gewichtung ist, die mit einer dritten Menge multipliziert wird, wobei die dritte Menge eine Warteschlangendienstrate zuzüglich des Mindestdatenstroms für die Verbindung und abzüglich der Summe des Mindestdatenstroms für jede der Vielzahl der Teilverbindungen ist.

8. Verfahren nach einem der vorhergehenden Ansprüche, wobei der Verkehr durch die Vermittlungsstelle eine Vielzahl von Paketen enthält und wobei der Schritt (b), in dem eine mögliche Überlastung festgestellt wird, auf der Grundlage einer ausdrücklichen Benachrichtigung über eine Überlastung (Explicit Congestion Notification, ECN) (140) für jedes Paket eines ersten Teils der Vielzahl der Pakete feststellt, ob eine Überlastung vorhanden ist.

9. Verfahren nach einem der Ansprüche 1 bis 7, wobei der Verkehr durch die Vermittlungsstelle eine Vielzahl von Paketen enthält und wobei der Schritt (b), in dem eine mögliche Überlastung festgestellt wird, auf der Grundlage eines Teils der Vielzahl der Pakete (150) feststellt, ob eine Überlastung vorhanden ist, wobei der Teil der Vielzahl der Pakete eine Vielzahl von Synchronisationspaketen enthält.

10. Verfahren nach einem der Ansprüche 1 bis 7, wobei der Verkehr durch die Vermittlungsstelle eine Vielzahl von Paketen enthält, wobei ein jedes Paket der Vielzahl der Pakete von einem Sender gesendet und von einem Empfänger empfangen wird und wobei der Schritt (b), in dem eine mögliche Überlastung festgestellt wird, auf der Grundlage einer Umlaufzeit zwischen dem Sender und dem Empfänger (160) für jedes Paket der Vielzahl der Pakete feststellt, ob eine Überlastung vorhanden ist.

11. Verfahren nach einem der Ansprüche 1 bis 7, wobei der Verkehr durch die Vermittlungsstelle eine Vielzahl von Paketen enthält, wobei ein jedes Paket eines ersten Teils der Vielzahl der Pakete von einem Sender gesendet und von einem Empfänger empfangen wird, und wobei der Schritt (b), in dem eine mögliche Überlastung festgestellt wird, auf der Grundlage einer ausdrücklichen Benachrichtigung über eine Überlastung für jedes Paket eines zweiten Teils der Vielzahl der Pakete, einer Umlaufzeit zwischen dem Sender und dem Empfänger für jedes Paket des ersten Teils der Vielzahl der Pakete und eines dritten Teils der Vielzahl der Pakete feststellt, ob eine Überlastung vorhanden ist, wobei der dritte Teil der Vielzahl der Pakete eine Vielzahl von Synchronisationspaketen (170) enthält.

**12.** Rechnerlesbares Medium, das ein Programm zur Steuerung einer Vielzahl von Teilverbindungen in einer Verbindung eines Rechnernetzwerks enthält, das mindestens eine Vermittlungsstelle beinhaltet, wobei die Vielzahl der Teilverbindungen die Vermittlungsstelle zur Übertragung von Verkehr durch das Netzwerk nutzt, wobei das Programm Befehle zur Durchführung aller Schritte des Verfahrens nach einem der Ansprüche 1 bis 11 enthält, wenn es auf einem Rechner ausgeführt wird.

**13.** System zur Steuerung einer Vielzahl von Teilverbindungen für eine Verbindung in einem Rechnernetzwerk, das eine Vermittlungsstelle beinhaltet, durch die eine Vielzahl der Teilverbindungen hindurchgeht, wobei das System Folgendes umfasst:

eine Warteschlange zur Verwendung durch die Vielzahl der Teilverbindungen bei der Übertragung von Verkehr durch die Vermittlungsstelle; und

einen Warteschlangen-Einreihmechanismus, der mit der Warteschlange verbunden ist, um unter Verwendung eines Mindestdatenstroms, der für jede der Vielzahl der Teilverbindungen von einem Benutzer festgelegt wird, Verkehr durch die Vermittlungsstelle zu steuern, und

**dadurch gekennzeichnet ist, dass** der Warteschlangen-Einreihmechanismus dafür vorgesehen ist festzustellen, ob die Verbindung überlastet ist, und um einen Datenstrom in einer Teilverbindung der Vielzahl der Teilverbindungen nur dann zu steuern, wenn eine Überlastung vorhanden ist, so dass der Datenstrom für die Teilverbindung linear erhöht werden kann, wenn der Datenstrom für die Teilverbindung der Vielzahl der Teilverbindungen geringer als der Mindestdatenstrom ist, und der Datenstrom für die Teilverbindung der Vielzahl der Teilverbindungen exponentiell verringert wird, wenn der Datenstrom größer als der Mindestdatenstrom ist, so dass der Verkehr durch die Vermittlungsstelle stabil ist.

**14.** System nach Anspruch 13, wobei der Warteschlangen-Einreihmechanismus des Weiteren feststellt, ob überschüssige Bandbreite vorhanden ist, und den Datenstrom für jede der Vielzahl der Teilverbindungen auf der Grundlage, ob überschüssige Bandbreite vorhanden ist oder nicht, erhöht oder verringert.

**15.** System nach Anspruch 14, wobei der Warteschlangen-Einreihmechanismus feststellt, ob überschüssige Bandbreite vorhanden ist, indem er feststellt, ob es eine zweite Art von Überlastung gibt, wobei er anzeigt, dass überschüssige Bandbreite vorhanden ist, wenn es die zweite Art von Überlastung gibt, und andernfalls anzeigt, dass keine überschüssige Bandbreite vorhanden ist.

**Revendications**

**1.** Un procédé pour commander une pluralité de canaux de communication secondaires dans un canal de communication d'un réseau d'ordinateurs incluant au moins un commutateur, la pluralité de canaux de communication secondaires utilisant le commutateur pour transmettre un trafic à travers le réseau, le procédé comprenant les étapes consistant à :

(a) permettre d'établir (102) un flux minimal pour chacun de la pluralité des canaux de communication secondaires ;

(b) déterminer s'il y a congestion (104, 116) pour le canal de communication ;

(c) commander un flux (106, 132) dans un canal de communication secondaire parmi la pluralité de canaux de communication secondaires s'il y a congestion, **caractérisé par** le fait de comprendre les étapes consistant à :

(c1) en réponse au fait que le flux du canal de communication secondaire est inférieur au flux minimal, augmenter de façon linéaire (106) ou laisser inchangé le flux du canal de communication secondaire ; et

(c2) en réponse au fait que le flux du canal de communication secondaire est supérieur au flux minimal, diminuer de façon exponentielle (106) le flux du canal de communication secondaire.

**2.** Le procédé selon la revendication 1, comprenant en outre l'étape consistant à :

(b1) déterminer s'il y a un excès de largeur de bande (120) ; et dans lequel :

l'étape d'augmentation linéaire (c1) est en outre réactive à l'existence d'un excès de largeur de bande ; et

l'étape de diminution exponentielle (c2) est en outre réactive à la non existence d'un excès de largeur de bande.

**3.** Le procédé selon la revendication 2, dans lequel le commutateur comprend en outre un processeur ayant une file d'attente, la pluralité de canaux de communication secondaires utilisant la file d'attente pour transmettre un trafic par le commutateur, dans lequel l'étape de détermination de largeur de bande (b1) détermine s'il y a un excès de largeur de bande, d'après la détermination du fait qu'il existe un excès de largeur de bande pour la file d'attente.

**4.** Le procédé selon la revendication 2, dans lequel l'étape de détermination d'un excès de largeur de bande (b1) détermine s'il y a un excès de largeur de bande, d'après la détermination du fait qu'il y a un deuxième type de congestion.

**5.** Le procédé selon l'une quelconque des revendications 2 à 4, dans lequel :

l'étape de détermination d'excès de largeur de bande (b1) comprend en outre l'étape consistant à :

(b1i) l'établissement d'une valeur d'excès de largeur de bande (128) comme étant une moyenne pondérée exponentiellement de valeurs d'excès de largeur de bande antérieures ; et

le flux du canal de communication secondaire de la pluralité de canaux de communication secondaires est un débit proposé, multiplié par une fraction de transmission et dans lequel l'étape d'augmentation linéaire (c1) établit la fraction de transmission (130) pour le canal de communication secondaire, comme étant une fraction de la transmission antérieure, plus une première quantité, la première quantité étant une première constante, multipliée par la valeur d'excès de largeur de bande, et l'étape de diminution exponentielle (c2) établissant la fraction de transmission pour le canal de communication secondaire, comme étant la fraction de transmission antérieure, moins une deuxième quantité, la deuxième quantité étant le flux antérieur, multiplié par une deuxième constante.

**6.** Le procédé selon la revendication 5, dans lequel la première constante et la deuxième constante dépendent du flux minimal pour le canal de communication.

**7.** Le procédé selon la revendication 5, dans lequel la première constance est un poids multiplié par une troisième quantité, ta troisième quantité étant un taux de service de file d'attente, plus le flux minimal pour le canal de communication, moins la somme du flux minimal pour chacun de la pluralité des canaux de communication secondaires.

**8.** Le procédé selon l'une quelconque des revendications précédentes, dans lequel le trafic passant par le commutateur comprend une pluralité de paquets et dans lesquels l'état de détermination de congestion (b) détermine s'il existe une congestion, d'après une notification de congestion explicite (ECN) (140) pour chacune d'une première partie de la pluralité des paquets.

**9.** Le procédé selon l'une quelconque des revendications 1 à 7, dans lequel le trafic passant par le commutateur comprend une pluralité de paquets, et dans lequel l'étape de détermination de congestion (b) détermine s'il y a une congestion d'après une partie de la pluralité de paquets (150), la partie de la pluralité de paquets comprenant une pluralité de paquets de synchronisation.

**10.** Le procédé selon l'une quelconque des revendications 1 à 7, dans lequel le trafic passant par le commutateur inclut une pluralité de paquets, chacun de la pluralité de paquets étant initié par un émetteur et reçu par un destinataire, et dans lequel l'étape de détermination de congestion (b) détermine s'il y a une congestion, en se basant sur un temps aller et retour entre l'émetteur et le destinataire (160) pour chacun de la pluralité des paquets.

**11.** Le procédé selon l'une quelconque des revendications 1 à 7, dans lequel le trafic passant par le commutateur inclut une pluralité de paquets, chacun de la première partie de la pluralité de paquets étant initié par un émetteur et reçu par un destinataire, et dans lequel l'étape de détermination de congestion (b) détermine s'il y a congestion d'après une notification de congestion explicite (ECN) pour chacune d'une deuxième partie de la pluralité de paquets, un temps d'aller et retour entre l'émetteur et le destinataire pour chacun de la première partie de la pluralité de paquets, et une troisième partie de la pluralité de paquets, la troisième partie de la pluralité de paquets incluant une pluralité de paquets de synchronisation (170).

**12.** Un support lisible par ordinateur, contenant un programme pour commander une pluralité de canaux de communication secondaires dans un canal de communication d'un réseau d'ordinateurs comprenant au moins un commutateur, la pluralité des canaux de communication secondaires utilisant le commutateur pour transmettre un trafic dans le réseau, le programme incluant des instructions pour effectuer la totalité des étapes du procédé selon l'une quelconque des revendications 1 à 11 exécuté sur un ordinateur.

13. Un système pour commander une pluralité de canaux de communication secondaires pour un canal de communication dans un réseau d'ordinateurs, incluant un commutateur croisé par la pluralité des canaux de communication secondaires, le système comprenant :

une file d'attente, pour utilisation par la pluralité de canaux de communication secondaires dans la transmission du trafic par le commutateur ; et

un mécanisme de mise en file d'attente, couplé à la file d'attente, pour commander le trafic passant par le commutateur en utilisant un flux minimal établi pour chacun de la pluralité des canaux de communication secondaire par un utilisateur, et **caractérisé par** le mécanisme de mise en file d'attente, utilisé pour déterminer si une congestion existe pour le canal de communication et pour commander un flux dans un canal de communication secondaire de la pluralité des canaux de communication secondaires uniquement s'il y a congestion, de manière que le flux du canal de communication secondaire puisse être augmenté de façon linéaire si le flux pour le canal de communication secondaire de la pluralité des canaux de communication secondaires est inférieur au flux minimal, et de manière que le flux du canal de communication secondaire de la pluralité des canaux de communication secondaires soit diminué de façon exponentielle, si le flux est supérieur au flux minimal, de manière que le trafic passant par le commutateur soit stable.

14. Le système selon la revendication 13, dans lequel le mécanisme de mise en file d'attente détermine en outre s'il y a un excès de largeur de bande et augmente ou diminue le flux pour chacun de la pluralité des canaux de communication secondaires, d'après le fait qu'il y a ou non excès de largeur de bande.

15. Le système selon la revendication 14, dans lequel le mécanisme de mise en file d'attente détermine s'il y a un excès de largeur de bande, en déterminant si un deuxième type de congestion existe, en indiquant qu'il y a excès de largeur de bande si le deuxième type de congestion existe et en indiquant qu'il n'y a autrement pas d'excès de largeur de bande.

Prior Art

Figure 1

40

41

Switch Fabric

47

42

Network
Processor

Ports

44

To/From Next
Component

48

42

Network
Processor

Ports

44

To/From Next
Component

49

42

Network
Processor

Ports

44

To/From Next
Component

Prior Art

Figure 2

EP 1 269 694 B1

<u>40</u>

Prior Art
Figure 3A

19

40'

Prior Art

Figure 3B

80

Set Queue Level and Weights — 82

Observe Queue Levels — 84

Change Flows Based on Queue Levels and Weights — 86

Transmit/Drop Packets Based On Flows — 88

90 — Desired Levels of Service Obtained?

No

Yes

Done — 92

Prior Art

Figure 4

Figure 5

<u>100</u>

```
┌─────────────────────────────────┐  ┌─ 102
│   Allow User to Set Minimum Flows │
│          for Sub-Pipes            │
└─────────────────────────────────┘
```

104

Pipe Congested?  ——Yes ——

106

Control Flows in Sub-Pipes
(Preferably Decrease Flows
Greater than their Max Flow,
Exponentially Decrease
Flows for Sub-Pipes with
Flow Greater Than or Equal
to Minimum Flow but Less
Than the Maximum Flow and
Leave Unchanged/Increase
Flows for Sub-Pipes with
Flow Less Than Minimum
Flow)

No

108 ——

Do Not Control Flows in
Sub-Pipes

Figure 6

<u>110</u>

```
┌─────────────────────┐
│ Compute Constants   │──── 112
│   for Each Pipe     │
└─────────────────────┘
          │
          ▼
┌─────────────────────┐
│ Allow Traffic to Flow│──── 114
│   Through Pipes     │
└─────────────────────┘
          │
  ©──────►│
          ▼
       ╱──────╲
      ╱ Pipe    ╲──── 116        No ──────┐
      ╲Congested?╱────────────────        │
       ╲──────╱                           ▼
          │                              (A)
         Yes
          │
          ▼
┌─────────────────────┐
│ Ensure B, E, Queue  │──── 118
│ Level and, Preferably,│
│  Flows Available    │
└─────────────────────┘
          │
          ▼
         (B)
```

Figure 7A

Figure 7B

<u>140</u>

```
          142
Determine ECN Level

144
        ECN Level
    Above Threshold?

No                          Yes

146                         148
Pipe Not                Pipe Congested
Congested
```

Figure 8

<u>150</u>

```
          152
Determine Level of SYN Packets

154
        SYN Packet
       Level Above
        Threshold?

No                          Yes

156                         158
Pipe Not                Pipe Congested
Congested
```

Figure 9

160

Figure 10

<u>170</u>

```
┌─────────────────────────────┐
│     Determine ECN Level      │── 172
└─────────────────────────────┘
                │
                ▼
┌─────────────────────────────┐
│  Determine SYN Packet Level  │── 174
└─────────────────────────────┘
                │
                ▼
┌─────────────────────────────┐
│   Determine Statistical      │── 176
│ Measurement of Round Trip Time│
└─────────────────────────────┘
                │
                ▼
┌─────────────────────────────┐
│ Provide Measure of Congestion│── 178
│ Based on ECN Level, SYN Packet│
│ Level and Measurement of Round│
│         Trip Time            │
└─────────────────────────────┘
                │
                ▼
        180 ╱◇◇◇◇◇◇◇╲
           ╱ Measure of ╲
    No    ╱  Congestion  ╲
◄─────────  Above        
           ╲ Threshold? ╱
            ╲◇◇◇◇◇◇◇◇╱
│                │
▼ 182            │ Yes
┌──────────┐     ▼
│ Pipe Not │   ┌──────────┐── 184
│Congested │   │   Pipe   │
└──────────┘   │Congested │
               └──────────┘
```

Figure 11

28